# EUROPÄISCHE PATENTANMELDUNG

(11) **EP 1 591 701 A2**
(43) Veröffentlichungstag der Anmeldung: **02.11.2005**
(21) Anmeldenummer: 05000450.6
(22) Anmeldetag: 12.01.2005
(51) Int. Cl.: F16K 1/20, F16K 27/02, F02D 9/04

(54) **Schwenklageranordnung für ein Stellglied in einer Abgasanlage**

(30) Priorität: 30.04.2004 DE 102004021496
(71) Anmelder: J. Eberspächer GmbH Co. KG, 73730 Esslingen (DE)
(72) Erfinder: Damson, Björn, Dr., 70569 Stuttgart (DE)

(57) **Zusammenfassung**

Die Erfindung betrifft eine Schwenklageranordnung (10) für ein Stellglied in einer Abgasanlage, insbesondere für eine Drosselklappe oder eine Ventilklappe in einem Abgasrohr (14) einer Abgasanlage. Die Schwenklageranordnung (10) hat eine Lagerstelle (26) und mindestens einen in der Lagerstelle (26) schwenkbar gelagerten Lagerzapfen (20). Der Lagerzapfen (20) weist an seiner Außenumfangsfläche und die Lagerstelle (26) an ihrer Lagerfläche jeweils einen definierten Flächenabschnitt (24, 36) auf, mit dem die beiden Flächen während der Schwenkbewegung aneinander zur Anlage kommen, wobei einer der Flächenabschnitte (24, 36) im Schnitt quer zur Schwenkachse (A) gesehen plan oder nach außen gewölbt verläuft, während der andere der beiden Flächenabschnitte (36, 24) im Schnitt quer zur Schwenkachse (A) gesehen nach außen gewölbt verläuft und sich bei einer Schwenkbewegung an dem anderen Flächenabschnitt (24, 36) abwälzt.

## Beschreibung

Die Erfindung betrifft eine Schwenklageranordnung nach dem Oberbegriff des Anspruchs 1 für ein Stellglied in einer Abgasanlage, insbesondere für eine Drosselklappe oder eine Ventilklappe in einem Abgasrohr einer Abgasanlage.

Abgasanlagen für Verbrennungsmotoren werden häufig mit beweglichen Stellgliedern, wie Drosselklappen, Ventilklappen und ähnlichem, ausgestattet, um den Abgasstrom, beispielsweise in Abhängigkeit von dem Betriebszustand des Verbrennungsmotors, gezielt in bestimmte Abschnitte der Abgasanlage zu leiten oder bestimmte Abschnitte der Abgasanlage zeitweise zu sperren.

Damit das betreffende Stellglied verstellt werden kann, ist es häufig in einer Schwenklageranordnung schwenkbar gelagert ist. Als Schwenklageranordnung wird üblicherweise eine sogenannte Gleitlageranordnung verwendet, bei der das Stellglied mit mindestens einem zylindrischen Lagerzapfen versehen ist, welcher in einer Lagerbohrung der Lagerstelle schwenkbar aufgenommen ist.

Problematisch bei der Verwendung eines derartigen Gleitlagers ist jedoch, dass aufgrund der herrschenden Betriebsbedingungen in einer Abgasanlage der Einsatz konventioneller Lagermaterialien und Schmierstoffe ausgeschlossen ist. So ist beispielsweise die Verwendung von Bronze oder Polytetrafluorethylen (PTFE) als Lagermaterial für derartige Gleitlager in Abgasanlagen aufgrund der auftretenden hohen Temperaturen sowie der im Abgas mitgeführten chemischen Verbindungen, welche oxidierend oder reduzierend wirken, wie Stickoxide, Schwefeloxide, Chlorwasserstoffe und ähnliches, nicht möglich. Auch ist der Einsatz von Schmierstoffen aufgrund der entstehenden hohen Temperaturen nicht möglich, da sich die Schmierstoffe entweder zersetzen oder aushärten. Ferner werden die Schmierstoffe zumindest teilweise von dem Abgasstrom mitgerissen.

Auch ein Nachschmieren derartiger Lageranordnungen ist aus Kostengründen kaum zu realisieren.

Aufgrund der einerseits in Gleitlagern wirkenden hohen Reibung und der andererseits kaum bestehenden Möglichkeit der Schmierung besteht bei Gleitlageranordnungen als Schwenklager die Gefahr, dass das Lager festsitzt oder durch Verschleiß zerstört wird. Alternativ können zwar Wälzlageranordnungen eingesetzt werden. Der Einsatz derartiger Wälzlager ist jedoch aus Kostengründen allenfalls in sehr beschränktem Umfang möglich, da die in Abgasanlagen einzusetzenden Wälzlager einerseits aus hitzebeständigen Werkstoffen gefertigt werden müssen, während sie andererseits ein ausreichendes Lagerspiel aufweisen müssen, um entstehende Wärmeausdehnungen auszugleichen. Darüber hinaus sind Wälzlager aufgrund ihres verglichen mit Gleitlagern komplexen Aufbaus gegenüber Verschmutzung relativ empfindlich.

Der Erfindung liegt die Aufgabe zugrunde, eine Schwenklageranordnung für ein Stellglied in einer Abgasanlage bereitzustellen, das einfach aufgebaut und kostengünstig herzustellen ist, während es gleichzeitig gegenüber den in Abgasanlagen herrschenden extremen Umgebungsbedingungen unempfindlich ist.

Diese Aufgabe wird durch eine Schwenklageranordnung mit den Merkmalen nach Anspruch 1 gelöst.

Ein wesentlicher Gedanke, auf dem die erfindungsgemäße Schwenklageranordnung beruht, ist, dass der Lagerzapfen nicht mit seiner gesamten Umfangsfläche an der Lagerfläche der Lagerstelle zur Anlage kommt und die beiden Flächen bei der Schwenkbewegung aneinander entlanggleiten. Vielmehr ist der Lagerzapfen an seiner Außenumfangsfläche mit einem definierten Flächenabschnitt versehen, der bei einer Schwenkbewegung lediglich an einem definierten Flächenabschnitt der Lagerfläche der Lagerstelle zur Anlage kommt. Die aneinander zur Anlage kommenden Flächenabschnitte des Lagerzapfens und der Lagerstelle sind dabei so gestaltet, dass die aneinander zur Anlage kommenden Flächenabschnitte nicht aneinander entlanggleiten, sondern vielmehr aufeinander abrollen bzw. aufeinander abwälzen. Zu diesem Zweck ist zumindest einer der aneinander zur Anlage kommenden Flächenabschnitte im Schnitt quer zur Schwenkachse gesehen nach außen gewölbt, bildet also eine nach außen abgerundete konvexe Fläche, oder verläuft plan. Der andere der beiden aneinander zur Anlage kommenden Flächenabschnitte ist dagegen nach außen gewölbt ausgebildet. Hierdurch wird erreicht, dass der nach außen gewölbte Flächenabschnitt, der entweder an der Außenumfangsfläche des Lagerzapfens oder an der Lagerfläche der Lagerstelle ausgebildet ist, an dem plan oder gleichfalls nach außen gewölbt verlaufenden Flächenabschnitt zur Anlage kommt, der an der entsprechenden Gegenfläche, also an der Lagerfläche der Lagerstelle oder an der Außenumfangsfläche des Lagerzapfens, vorgesehen ist.

Durch den gewölbten Verlauf mindestens eines der Flächenabschnitte wird erreicht, dass die Flächenabschnitte bei einer Schwenkbewegung nicht unter Reibung aneinander entlanggleiten, sondern aufeinander abrollen bzw. sich an einander abwälzen. Hierdurch wird der bei Gleitlagern durch das aneinander Entlanggleiten sonst übliche, auftretende Verschleiß vermieden. Gleichzeitig ist ein Schmieren der Schwenklageranordnung nicht erforderlich, da lediglich eine linienförmige Berührung zwischen den beiden Flächenabschnitten auftritt, die ein Schmieren entbehrlich macht. Aufgrund des geringen Verschleißes besteht bei der erfindungsgemäßen Schwenklageranordnung wiederum nicht die Gefahr, dass das Lager während des Betriebes festsitzt.

Weitere Vorteile der Erfindung ergeben sich aus der folgenden Beschreibung, der Zeichnung, sowie den Unteransprüchen.

So wird bei einer besonders bevorzugten Ausführungsform der erfindungsgemäßen Schwenklageranordnung vorgeschlagen, dass der Flächenabschnitt an der Außenumfangsfläche des Lagerzapfens eine im Schnitt quer zur Schwenkachse gesehen nach außen gewölbte Querschnittsform aufweist. So lassen sich Lagerzapfen als separate Bauteile aus Profilstangen fertigen, welche auf sehr einfache Weise in unterschiedlichsten Querschnittsformen, beispielsweise durch Strangguss oder durch Ziehen, gefertigt werden können, wodurch sich eine besonders kostengünstige Schwenklageranordnung realisieren lässt.

Besonders von Vorteil ist es, wenn nicht nur der Flächenabschnitt an der Außenumfangsfläche des Lagerzapfens, sondern auch der Flächenabschnitt an der Lagerfläche der Lagerstelle im Schnitt quer zur Schwenkachse gesehen eine nach außen gewölbte Querschnittsform aufweist. Dadurch, dass beide aneinander zur Anlage kommenden Flächenabschnitte gewölbt sind, ist eine besonders reibungsarme Abwälzbewegung der beiden Flächenabschnitte aneinander möglich.

Des Weiteren ist es von besonderem Vorteil, wenn der jeweils nach außen gewölbt verlaufende Flächenabschnitt einen evolventenförmigen Verlauf aufweist, wodurch eine sehr definierte Schwenkbewegung des Stellgliedes bei gleichzeitig geringster Reibung ermöglicht wird.

Damit die Schwenkbewegung ausschließlich über die Flächenabschnitte erfolgt, wird bei einer besonders bevorzugten Ausführungsform der erfindungsgemäßen Schwenklageranordnung ferner vorgeschlagen, die aneinander zur Anlage kommenden Flächenabschnitte gegeneinander elastisch vorzuspannen, beispielsweise durch eine Feder.

Die Flächenabschnitt der Schwenklageranordnung sind vorzugsweise so ausgebildet, dass die Schwenkbewegung des Lagerzapfens auf einen Winkel von 180° begrenzt ist, da die Stellglieder in Abgasanlagen, wie Drosselklappen oder Ventilklappen, üblicherweise lediglich aus dem Abgasstrom weggeschwenkt werden müssen.

Als Lagerstelle dient vorzugsweise mindestens ein Lagerbock mit einer Lageröffnung, in welcher der Lagerzapfen schwenkbar gelagert ist, wobei sich der Lagerzapfen mit dem Flächenabschnitt seiner Außenumfangsfläche an dem Flächenabschnitt der in der Lageröffnung vorgesehenen Lagerfläche abstützt. Der Flächenabschnitt der Lagerstelle ist dabei vorzugsweise an der als Lagerfläche dienen Innenumfangsfläche der Lageröffnung vorgesehen, wobei der Flächenabschnitt der Lagerstelle im Schnitt quer zur Schwenkachse gesehen plan oder ausgehend von der Innenumfangsfläche gesehen nach außen gewölbt ist, also radial in die Lageröffnung hineinragt.

Um den in der Lageröffnung vorgesehenen Flächenabschnitt auf einfache Weise realisieren zu können, wird bei einer besonders bevorzugten Weiterbildung der zuvor beschriebenen Ausführungsform vorgeschlagen, in die Lageröffnung einen Profileinsatz einzusetzen, der sich mit seiner Außenumfangsfläche abschnittsweise in der Lageröffnung abstützt und an dem der Flächenabschnitt ausgebildet ist, an welchem sich der Lagerzapfen bei einer Schwenkbewegung mit seinem Flächenabschnitt abwälzt. Durch Verwendung eines derartigen Profileinsatzes ist es möglich, bei identisch gestalteten Lageröffnungen unterschiedlich beschaffene Lagerflächen innerhalb der Lageröffnung auszubilden, wobei auch hier der Profileinsatz vergleichsweise einfach beispielsweise durch Strangguss oder Ziehen herzustellen ist. Um ein Verdrehen des Profileinsatzes in der Lageröffnung zu verhindern, wird der Profileinsatz vorzugsweise lösbar mit dem Lagerbock verbunden. Alternativ ist es jedoch auch möglich, ein Verdrehen des Profileinsatzes in der Lageröffnung zu verhindern, in dem an der Außenumfangsfläche des Profileinsatzes mindestens ein Formelement, beispielsweise eine Kante, ausgebildet ist, welche mit einer entsprechenden Ausnehmung in der Lageröffnung formschlüssig in Eingriff steht.

Die Lageröffnung ist bei dieser zuvor geschilderten Weiterbildung vorzugsweise zumindest annähernd hohlzylinderförmig ausgebildet, während der Profileinsatz einen an die Innenumfangsfläche der Lageröffnungen angepassten Umfangsflächenabschnitt aufweist, mit welchem der Profileinsatz an der Innenumfangsfläche der Lageröffnung anliegt, während der Flächenabschnitt, an dem sich der Lagerzapfen mit seinem Flächenabschnitt abwälzt, quer zur Schwenkachse gesehen nach außen gewölbt ist und in die Lageröffnung radial hineinragt.

Ist die Lagerstelle aus zwei Lagerböcken mit koaxial zueinander verlaufenden Lageröffnungen gebildet, ist es von Vorteil, nur einen Profileinsatz zu verwenden, der in die beiden Lageröffnungen eingesetzt und an den Lagerböcken gesichert ist, wodurch die Montage vereinfacht ist. Die dann vorgesehenen zwei Lagerzapfen, die in den beiden Lageröffnungen gelagert sind, stützen sich dann an dem Profileinsatz gemeinsam ab. Dabei ist es vorteilhaft, wenn auch die beiden Lagerzapfen an einer gemeinsamen Lagerachse ausgebildet sind.

Vorzugsweise ist das Stellglied fest mit den Lagerzapfen bzw. der Lagerachse verbunden. Hierzu eignet sich unter anderem ein entsprechend gestalteter Winkel oder Hebel, der mit der beispielsweise als Stellglied dienenden Drosselklappe und gleichzeitig mit den Lagerzapfen oder der Lagerachse der Schwenklageranordnung fest verbunden ist.

Besonders vorteilhaft ist es schließlich, wenn sowohl der bzw. die Lagerzapfen als auch die Komponenten der Lagerstelle aus demselben Werkstoff gefertigt sind wie die Komponenten der Abgasanlage, wodurch ein Einfluss auf die Schwenkbarkeit der Schwenklageranordnung aufgrund unterschiedlicher Wärmeausdehnungen sicher verhindert ist.

Weitere Merkmale und Vorteile der Erfindung ergeben sich aus der nachfolgenden Beschreibung eines bevorzugten Ausführungsbeispiels unter Bezugnahme auf die beigefügte Zeichnung. Darin zeigt:
- Fig. 1: eine schematische Schnittansicht einer erfindungsgemäßen Schwenklageranordnung für eine Drosselklappe, welche in ihrer geschlossenen Stellung dargestellt ist,
- Fig. 2: eine vergrößerte perspektivische Explosionsdarstellung wesentlicher Komponenten der erfindungsgemäßen Schwenklageranordnung sowie
- Fig. 3: eine schematische Schnittansicht der erfindungsgemäßen Schwenklageranordnung entsprechend der Fig. 1 mit geöffneter Drosselklappe.

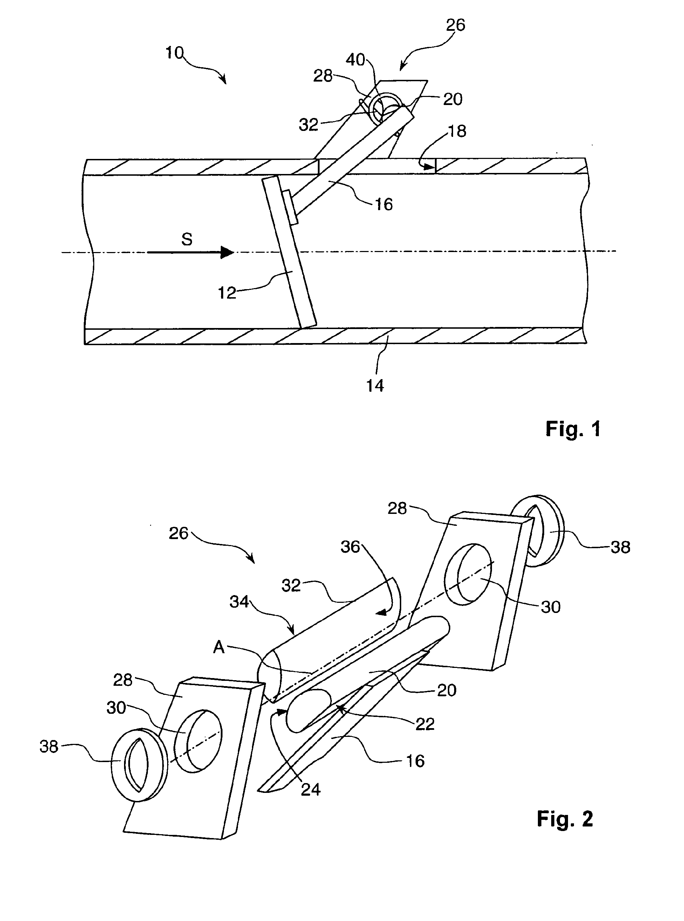

In Fig. 1 ist in schematischer Schnittansicht eine erfindungsgemäße Schwenklageranordnung 10 für eine Drosselklappe 12 in einem Rohr 14 einer nicht weiter dargestellten Abgasanlage gezeigt. Die in Fig. 1 dargestellte Schwenklageranordnung 10 ist beispielsweise für eine Drosselanordnung einsetzbar, wie sie in der deutschen Patentanmeldung 103 04 364 beschrieben ist, die gleichfalls auf die Inhaberin zurückgeht und deren Inhalt hiermit einbezogen wird.

An der Rückseite der Drosselklappe 12 ist ein Haltebügel 16 befestigt, welcher durch eine Führungsöffnung 18 aus dem Abgasrohr 14 herausragt. Die Führungsöffnung 18 ist dabei in ihrer Größe so bemessen, dass die Drosselklappe 12 problemlos bei der Montage in das Abgasrohr 14 eingeführt werden kann, jedoch die Schwenkbewegung der Drosselklappe 12 im Abgasrohr 14 auf etwa 60° beschränkt ist. Am anderen Ende des Haltebügels 16 ist eine quer zur Längsrichtung des Haltebügels 16 verlaufende Lagerachse 20 in Form einer Profilstange durch Schweißen befestigt.

Wie Fig. 2 weiter zeigt, in der das obere Ende des Haltebügels 16 sowie die daran befestigte Lagerachse 20 zu erkennen ist, hat die Lagerachse 20 quer zu ihrer Längsrichtung betrachtet eine plan ausgebildete Rückseite 22, an der das eine Ende des Haltebügels 16 befestigt ist. Die Vorderseite der Lagerachse 20 bildet ein gewölbter Flächenabschnitt 24, welcher evolventenförmig verläuft. Der gewölbte Flächenabschnitt 24 erstreckt sich dabei über die gesamte Länge der Lagerachse 20.

Die Lagerachse 20 ist mit ihren beiden Enden, die als Lagerzapfen dienen, in einer Lagerstelle 26 schwenkbar gelagert, deren Aufbau nachfolgend gleichfalls unter Bezugnahme auf Fig. 2 näher erläutert wird.

Die Lagerstelle 26 weist zwei identisch ausgebildete Lagerböcke 28 auf, von denen jeder mit einer hohlzylindrischen Durchgangsbohrung als Lageröffnung 30 versehen ist. Die beiden Lagerböcke 28 sind beiderseits der Führungsöffnung 18 am Abgasrohr 14 durch Schweißen derart befestigt, dass die beiden Lageröffnungen 30 zueinander fluchten. In die Lageröffnungen 30 ist ein Profileinsatz 32 eingeführt, welcher in seiner Länge so bemessen ist, dass er in montiertem Zustand aus den beiden Lageröffnungen 30 mit seinen beiden Enden geringfügig hervorsteht.

Der Profileinsatz 32 hat eine in seiner Längsrichtung betrachtet konstante Querschnittsform, wobei die in Fig. 2 teilweise verdeckt gezeigte Rückseite 34 des Profileinsatzes 32 im Querschnitt einen konstanten Radius aufweist, welcher an den Radius der Lageröffnungen 30 derart angepasst ist, dass die Rückseite 34 des Profileinsatzes 32 gleichmäßig an der Innenumfangsfläche der beiden Lageröffnungen 30 anliegt.

Die in Fig. 2 dargestellte Vorderseite des Profileinsatzes 32 ist durch einen als Lagerfläche dienenden Flächenabschnitt 36 gebildet, welcher, wie der Flächenabschnitt 24 der Lagerachse 20, im Querschnitt gleichfalls nach außen gewölbt ist und einen evolventenförmigen Verlauf aufweist.

Zur Sicherung des Profileinsatzes 32 ist in dessen montiertem Zustand an den beiden aus den Lageröffnungen 30 herausragenden Enden jeweils ein scheibenförmiges Befestigungselement 38 vorgesehen, wobei die Befestigungselemente 38 beispielsweise durch Splinte lösbar mit dem Profileinsatz 32 verbunden sind. Eines der beiden Befestigungselemente 38 kann darüber hinaus mit dem Lagerbock 28, an dem er anliegt, beispielsweise durch Verschweißen, fest verbunden sein, um ein Verdrehen des Profileinsatzes 32 relativ zu den Lageröffnungen 30 zu verhindern. Das andere Befestigungselemente 38 sollte dagegen lose am anderen Lagerbock 28 anliegen, um eine Längenausdehnung des Profileinsatzes 32 zu ermöglichen.

Um ein Verdrehen des Profileinsatzes 32 in den Lageröffnungen 30 zu verhindern, ist es alternativ auch möglich, an der Rückseite 34 des Profileinsatzes 32 beispielsweise eine sich über dessen gesamte Länge erstreckende Kante auszubilden, welche mit einer entsprechenden Ausnehmung in jeder Lageröffnung 30 formschlüssig in Eingriff steht.

Wie Fig. 1 weiter zeigt, ist auf den Lagerzapfen 20 sowie den Profileinsatz 32 eine Spiralfeder 40 aufgeschoben, welche sich mit einem ihrer beiden umgebogenen Enden am Haltebügel 16 und mit ihrem anderen Ende an einem der beiden Lagerböcke 28 abstützt und hierdurch die Drosselklappe 12 gegen die Strömungsrichtung S des Abgases elastisch vorspannt. Mit Hilfe der Spiralfeder 40 werden darüber hinaus die beiden aneinander zur Anlage kommenden Flächenabschnitte 24 und 36 des Lagerzapfens 20 und des Profileinsatzes 32 gegeneinander so elastisch vorgespannt, dass eine Berührung der Lagerachse 20 der Drosselklappe 12 an der Innenumfangsfläche der beiden Lageröffnungen 30 vermieden ist.

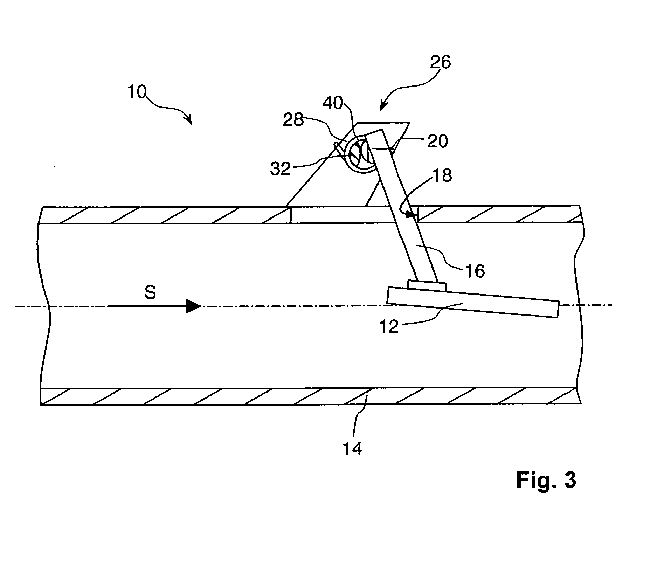

Wird die Drosselklappe 12 in ihre in Fig. 3 gezeigte offene Stellung gegen die Kraft der Spiralfeder 40 geschwenkt, rollt bzw. wälzt sich der an der Lagerachse 20 des Haltebügels 16 ausgebildete Flächenabschnitt 24 an dem Flächenabschnitt 36 des Profileinsatzes 32 der Lagerstelle 26 gleichmäßig ab, wobei durch die Abwälzbewegung die Entstehung von Reibung zwischen dem Lagerzapfen 20 und dem Profileinsatz 32 nahezu vollständig vermieden wird. Dabei wandert die in Fig. 2 dargestellte Schwenkachse A mit der Berührungslinie zwischen den beiden Flächenabschnitten 24 und 36 mit. Gleichzeitig kann durch die evolventenförmige Gestaltung der beiden Flächenabschnitte 24 und 36 die Schwenkbewegung der Drosselklappe 12 gezielt beeinflusst werden, wobei auch hier durch den evolventenförmigen Verlauf zusätzlich ein Abwälzen der beiden Flächenabschnitte 24 und 36 aneinander unterstützt wird.

Das in den Fig. 1 bis 3 gezeigte Ausführungsbeispiel stellt nur eine mögliche Variante der erfindungsgemäßen Schwenklageranordnung dar. So kann beispielsweise bei entsprechender Gestaltung der Kontur der Lageröffnung 30 auf die Verwendung des Profileinsatzes 32 verzichtet werden.

Darüber hinaus ist es möglich, einen der beiden Flächenabschnitte 24 bzw. 36 im Querschnitt gesehen plan auszubilden, so dass der andere gewölbt verlaufende Flächenabschnitt 36 bzw. 24 auf einer ebenen Fläche abrollen kann. Ferner ist es möglich, die Lageröffnungen 30 unmittelbar im Abgasrohr 14 auszubilden.

Des Weiteren können anstelle der Lagerachse 20 auch zwei koaxial zueinander verlaufende, identische Lagerzapfen seitlich von dem Haltebügel 16 in entgegengesetzte Richtungen wegstehen, wobei jeder Lagerzapfen an seiner Außenumfangsfläche mit dem Flächenabschnitt 24 versehen ist.

### Bezugszeichenliste:

- 10: Schwenklageranordnung
- 12: Drosselklappe
- 14: Abgasrohr
- 16: Haltebügel
- 18: Führungsöffnung
- 20: Lagerachse
- 22: Rückseite
- 24: Flächenabschnitt
- 26: Lagerstelle
- 28: Lagerböcke
- 30: Lageröffnungen
- 32: Profileinsatz
- 34: Rückseite
- 36: Flächenabschnitt
- 38: Befestigungselement
- 40: Spiralfeder
- A: Schwenkachse
- S: Strömungsrichtung des Abgases

## Patentansprüche

1. Schwenklageranordnung für ein Stellglied einer Abgasanlage, insbesondere für eine Drosselklappe oder eine Ventilklappe in einem Abgasrohr einer Abgasanlage, mit einer Lagerstelle (26) und mindestens einem in der Lagerstelle (26) schwenkbar gelagerten Lagerzapfen (20), welcher sich mit seiner Außenumfangsfläche (24) bei einer Schwenkbewegung abschnittsweise an einer Lagerfläche (36) der Lagerstelle (26) abstützt,
**dadurch gekennzeichnet,**
**dass** der Lagerzapfen (20) an seiner Außenumfangsfläche und die Lagerstelle (26) an ihrer Lagerfläche jeweils einen definierten Flächenabschnitt (24, 36) aufweisen, mit dem die beiden Flächen während der Schwenkbewegung aneinander zur Anlage kommen, wobei einer der Flächenabschnitte (24, 36) im Schnitt quer zur Schwenkachse (A) gesehen plan oder nach außen gewölbt verläuft, während der andere der beiden Flächenabschnitte
(36, 24) im Schnitt quer zur Schwenkachse (A) gesehen nach außen gewölbt verläuft und sich bei einer Schwenkbewegung an dem anderen Flächenabschnitt (24, 36) abwälzt.

2. Schwenklageranordnung nach Anspruch 1, **dadurch gekennzeichnet, dass** der Flächenabschnitt (24) an der Außenumfangsfläche des Lagerzapfens (20) eine im Schnitt quer zur Schwenkachse (A) gesehen nach außen gewölbte Querschnittsform aufweist.

3. Schwenklageranordnung nach Anspruch 1 oder 2, **dadurch gekennzeichnet, dass** der Flächenabschnitt (36) der Lagerfläche der Lagerstelle (26) im Schnitt quer zur Schwenkachse (A) gesehen eine ebene oder nach außen gewölbte Querschnittsform aufweist.

4. Schwenklageranordnung nach mindestens einem der Ansprüche 1, 2 oder 3, **dadurch gekennzeichnet, dass** der nach außen gewölbt verlaufende Flächenabschnitt (24, 36) einen evolventenförmigen Verlauf aufweist.

5. Schwenklageranordnung nach mindestens einem der vorhergehenden Ansprüche, **dadurch gekennzeichnet, dass** die beiden aneinander zur Anlage kommenden Flächenabschnitte (24, 36) gegeneinander elastisch vorgespannt sind.

6. Schwenklageranordnung nach mindestens einem der vorhergehenden Ansprüche, **dadurch gekennzeichnet, dass** die Flächenabschnitt (24, 36) derart ausgebildet sind, dass die Schwenkbewegung des Lagerzapfens (20) in der Lagerstelle (26) auf einen Winkel von maximal 180° begrenzt ist.

7. Schwenklageranordnung nach mindestens einem der vorhergehenden Ansprüche, **dadurch gekennzeichnet, dass** die Lagerstelle (26) mindestens einen Lagerbock (28) mit einer Lageröffnung (30) aufweist und dass der Lagerzapfen (20) in der Lageröffnung (30) schwenkbar gelagert ist und sich mit seinem Flächenabschnitt (24) seiner Außenumfangsfläche an dem Flächenabschnitt (36) der in der Lageröffnung (30) vorgesehenen Lagerfläche abstützt.

8. Schwenklageranordnung nach Anspruch 7, **dadurch gekennzeichnet, dass** in die Lageröffnung (30) ein Profileinsatz (32) eingesetzt ist, der sich mit seiner Außenumfangsfläche abschnittsweise in der Lageröffnung (30) abstützt und an dem der Flächenabschnitt (36) ausgebildet ist, an welchem sich der Lagerzapfen (20) bei einer Schwenkbewegung mit seinem Flächenabschnitt (24) abwälzt.

9. Schwenklageranordnung nach Anspruch 8, **dadurch gekennzeichnet, dass** die Lageröffnung (30) zumindest annähernd hohlzylinderförmig ist, dass der Profileinsatz (32) einen an die Innenumfangsfläche der Lageröffnung (30) angepaßten Umfangsflächenabschnitt aufweist, mit welchem der Profileinsatz (32) an der Innenumfangsfläche der Lageröffnung (30) anliegt, und dass der Flächenabschnitt (36) des Profileinsatzes (32), an dem sich der Lagerzapfen (20) mit seinem Flächenabschnitt (24) abwälzt, quer zur Schwenkachse (A) gesehen nach außen gewölbt ist und radial in die Lageröffnungen (30) hineinragt.

10. Schwenklageranordnung nach Anspruch 8 oder 9, **dadurch gekennzeichnet, dass** die Lagerstelle (26) zwei Lagerböcke (28) mit koaxial zueinander verlaufenden Lageröffnungen (30) aufweist, dass der Profileinsatz (32) in die beiden Lageröffnungen (30) eingesetzt und an mindestens einem der Lagerböcke (28) gesichert ist, und dass zwei Lagerzapfen (20) vorgesehen sind, die jeweils in einer der Lageröffnungen (30) gelagert sind.

11. Schwenklageranordnung, nach Anspruch 10, **dadurch gekennzeichnet, dass** die Lagerzapfen an einer gemeinsamen Lagerachse (20) ausgebildet sind.

12. Schwenklageranordnung nach einem der Ansprüche 10 oder 11, **dadurch gekennzeichnet, dass** das Stellglied (12) fest mit den Lagerzapfen bzw. der Lagerachse (20) verbunden ist.

13. Schwenklageranordnung nach mindestens einem der vorhergehenden Ansprüche, **dadurch gekennzeichnet, dass** der bzw. die Lagerzapfen (20) sowie die Komponenten (28, 38) der Lagerstelle (26) aus demselben Werkstoff gefertigt sind, wie die Abgasanlage.
